# EUROPEAN PATENT SPECIFICATION

(11) **EP 3 967 943 B1**
(45) Date of publication and mention of the grant of the patent: **03.12.2025**
(21) Application number: 21190908.0
(22) Date of filing: 11.08.2021
(51) Int. Cl.: F24F 11/36, F24F 11/89, F24F 13/20, F25B 49/00, F24F 5/00, F24D 3/18, F24D 17/02, F24D 19/10, F25B 13/00, F24F 140/12

(54) **HEAT MEDIUM CIRCULATION SYSTEM**
WÄRMEMEDIUMZIRKULATIONSSYSTEM
SYSTÈME DE CIRCULATION DU FLUIDE THERMIQUE

(30) Priority: 14.09.2020 JP 2020153414
(43) Date of publication of application: 16.03.2022
(73) Proprietor: Panasonic Intellectual Property Management Co., Ltd., Osaka-shi, Osaka 540-6207 (JP)
(72) Inventor: MORIWAKI, Shunji, Osaka-shi, Osaka 540-6207 (JP); YAMAOKA, Yuki, Osaka-shi, Osaka 540-6207 (JP); IMAGAWA, Tsuneko, Osaka-shi, Osaka 540-6207 (JP); AOYAMA, Shigeo, Osaka-shi, Osaka 540-6207 (JP); MACHIDA, Kazuhiko, Osaka-shi, Osaka 540-6207 (JP)
(74) Representative: Eisenführ Speiser

(56) References cited:
- WO-A1-2018/105102
- WO-A1-2019/239556
- JP-A- 2001 208 392
- JP-A- H10 338 023

## Description

### [TECHNICAL FIELD]

The present disclosure relates to a heat medium circulation system.

### [BACKGROUND TECHNIQUE]

Patent document 1 discloses that an outdoor unit includes, as a refrigerant discharge valve, at least one of a pressure relief valve and an air vent valve provided in a heat medium circuit, and the refrigerant discharge valve is provided outside a casing of the outdoor unit.

Patent document 2 discloses an air conditioner that comprises: a refrigerant circuit in which refrigerant circulates, the refrigerant circuit being such that a compressor, a heat-source-side heat exchanger that performs heat exchange between air and the refrigerant, an expansion part, and an inter-medium heat exchanger that performs heat exchange between the refrigerant and a heat medium are connected by refrigerant piping; a heat medium circuit in which the heat medium circulates, the heat medium circuit being such that a pump, the inter-medium heat exchanger, and a load-side heat exchanger that performs heat exchange between air-conditioned air and the heat medium are connected by heat medium piping; a discharge part connected to the downstream side of the inter-medium heat exchanger in the heat medium circuit, the discharge part discharging a fluid flowing through the heat medium piping to the outside of the heat medium piping in accordance with the pressure of the fluid; a refrigerant detection device that senses the concentration of refrigerant included in the fluid discharged from the discharge unit; a notification device that issues a notification about a leak of the refrigerant; and a control device that operates the notification device on the basis of the concentration of refrigerant detected by the refrigerant detection device.

### [PRIOR ART DOCUMENTS]

### [PATENT DOCUMENTS]

[Patent Document 1] PCT International Publication No.WO2018/047265
[Patent Document 2] PCT International Publication No. WO 2019/239556 A1

### [SUMMARY OF THE INVENTION]

### [PROBLEM TO BE SOLVED BY THE INVENTION]

The present disclosure provides a heat medium circulation system which prevents flammable refrigerant from leaking into a living space by dispersing, into the atmosphere, flammable refrigerant which leaks into a heat medium circuit.

### [MEANS FOR SOLVING THE PROBLEM]

A heat medium circulation system in the present invention includes: a refrigerant circuit which is formed by annularly connecting a compressor, a use-side heat exchanger, an expander and a heat source-side heat exchanger to one another and through which flammable refrigerant circulates; an air blower for generating air which passes through the heat source-side heat exchanger ; a casing where at least the refrigerant circuit and the air blower are placed; a heat medium circuit through which liquid phase heat medium cooled or heated in the use-side heat exchanger by the flammable refrigerant discharged from the compressor circulates; a conveying device which is provided in the heat medium circuit and through which the heat medium circulates; a gas discharging device for discharging, to outside the heat medium circuit, the flammable refrigerant which leaks into the heat medium circuit; a gas discharging path which induces the flammable refrigerant to be discharged to outside atmosphere and which is connected to a discharge port of the gas discharging device. Further in accordance with the invention, the gas discharging device is provided in the casing, and an opening of the gas discharging path is provided at a position higher than a center of the air blower in its height direction.

### [EFFECT OF THE INVENTION]

A heat medium circulation system in the present invention can prevent flammable refrigerant from leaking into a living space by dispersing, into the atmosphere, flammable refrigerant which leaks into a heat medium circuit.

### [BRIEF DESCRIPTION OF THE DRAWINGS]

Fig. 1 is a block diagram of a heat medium circulation system in an embodiment of the present invention;
Fig. 2 is a pressure-enthalpy diagram (P-h diagram) of the heat medium circulation system in the embodiment;
Fig. 3 is a block diagram of a control system of the heat medium circulation system in the embodiment;
Fig. 4 is a schematic diagram of a state where refrigerant gas in a heat medium circuit in the embodiment is discharged into the atmosphere;
Fig. 5 is a schematic diagram for explaining a position of an opening of a gas discharging path in the embodiment; and
Fig. 6 is a control flowchart of detection of leakage of flammable refrigerant of the heat medium circulation system in the embodiment into the heat medium circuit and a shut-off valve.

### [MODE FOR CARRYING OUT THE INVENTION]

The embodiment will be described below in detail with reference to the drawings. Excessively detailed description will be omitted in some cases. For example, detailed description of already well known matters, or redundant description of substantially the same configuration will be omitted in some cases. This is for preventing the following description becoming redundant more than necessary, and for making it easy for a person skilled in the art to understand.

The accompanying drawings and the following description are provided so that the person skilled in the art can sufficiently understand the present disclosure, and it is not intended that they limit the subject matter described in claims.

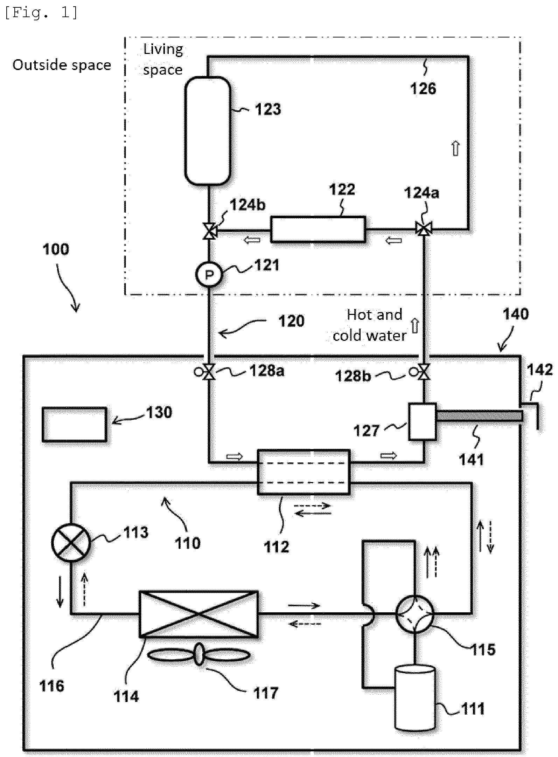

An embodiment of the present invention will be described below using Figs. 1 to 6.

### [1-1. Configuration]

### [1-1-1. Configuration of heat medium circulation system]

In Fig. 1, a heat medium circulation system 100 includes a refrigerant circuit 110, a heat medium circuit 120 and a control device 130.

The refrigerant circuit 110 is a vapor compression type refrigeration cycle. The refrigerant circuit 110 is configured by sequentially connecting a compressor 111, a use-side heat exchanger 112, an expander 113 and a heat source-side heat exchanger 114 to one another through pipe 116. As refrigerant, propane which is flammable refrigerant is used.

The refrigerant circuit 110 is provided with a four-way valve 115. The four-way valve 115 switches between a heating operation to produce warm water which is heat medium and a cooling operation to produce cold water which is heat medium.

The heat source-side heat exchanger 114 also includes an air blower 117 having a propeller fan which generates air passing through the heat source-side heat exchanger 114.

The heat medium circuit 120 is configured by sequentially connecting, to one another through a heat medium pipe 126, a conveying device 121 which is a conveying pump, the use-side heat exchanger 112, a gas discharging device 127 which is placed in a casing 140 and which can discharge, to outside, flammable refrigerant leaking into the heat medium circuit 120, and a use-side terminal 122 which is a heating terminal or a cooling terminal. Water or antifreeze solution is used as heat medium.

In the heat medium circuit 120, a shut-off valve A 128a which stops flow of heat medium is provided between the conveying device 121 and the use-side heat exchanger 112, and a shut-off valve B 128b is provided between the gas discharging device 127 and a switching valve A 124a.

That is, in a flowing direction of heat medium in the heat medium circuit 120, the shut-off valve A 128a is provided downstream of the conveying device 121 and upstream of the use-side heat exchanger 112.

Further, in the flowing direction of heat medium in the heat medium circuit 120, the shut-off valve B 128b is provided downstream of the use-side heat exchanger 112 and downstream of the gas discharging device 127.

That is, the gas discharging device 127 is provided downstream of the use-side heat exchanger 112 between the shut-off valve A 128a and the shut-off valve B 128b which sandwich the use-side heat exchanger 112. The gas discharging device 127 can discharge, to outside, flammable refrigerant which leaks into the heat medium circuit 120.

The gas discharging device 127 is provided in the heat medium circuit 120 at the highest position between the use-side heat exchanger 112 and the shut-off valve B 128b placed downstream of the use-side heat exchanger 112.

A gas discharging path 141 is connected to a discharge port of the gas discharging device 127. The gas discharging path 141 induces, to the atmosphere, gas discharged from the discharge port of the gas discharging device 127 from an outer surface of the casing 140 of the outdoor unit placed outside.

An opening of the gas discharging path 141 is formed in an outer surface of the casing 140 of the outdoor unit placed outside on the downstream side of the air blower 117. The opening of the gas discharging path 141 is formed at a position higher than a center of the propeller fan of the air blower 117 in its height direction. The gas discharging path 141 may be formed into a hose shape, and the opening of the gas discharging path 141 may be placed at the position higher than the center of the propeller fan of the air blower 117 of the outer surface of the casing 140 of the outdoor unit in the height direction on the downstream side of the air blower 117. The opening of the gas discharging path 141 may be placed at a position higher than the center of the propeller fan of the air blower 117 in its height direction on the upstream side of the heat source-side heat exchanger 114. In this case also, the gas discharging path 141 may be formed into the hose shape.

A duct 142 is provided in the casing 140 to cover the opening of the gas discharging path 141. A flowing direction is changed such that gas discharged from the discharge port of the gas discharging device 127 blows out downward.

If at least the shut-off valve B 128b is placed downstream of the use-side heat exchanger 112 and the gas discharging device 127, it is possible to prevent flammable refrigerant which leaks into the heat medium circuit 120 from moving toward indoor side where the use-side terminal 122 is placed, and it is possible to discharged, to outside, flammable refrigerant which leaks into the heat medium circuit 120 by the gas discharging device 127.

The switching valve A 124a and a switching valve B 124b which selectively switch circuits of heat medium are provided in the heat medium circuit 120.

That is, the switching valve B 124b is provided upstream of the conveying device 121, and the switching valve A 124a is provided downstream of the shut-off valve B 128b. The switching valve A 124a, the use-side terminal 122 and the switching valve B 124b are connected to one another through the heat medium pipe 126.

The heat medium circuit 120 is provided with a hot water tank 123 in parallel with the use-side terminal 122. The hot water tank 123 is connected through the heat medium pipe 126 which branches off from the switching valve A 124a and joins the switching valve B 124b.

The refrigerant circuit 110, the air blower 117, the control device 130, the shut-off valve A 128a, the shut-off valve B 128b and the gas discharging device 127 are provided in the casing 140 of the outdoor unit which is placed outside.

In Fig. 1, solid line arrows show the flowing direction of refrigerant at the time of heating operation, and broken line arrows show the flowing direction of refrigerant at the time of cooling operation.

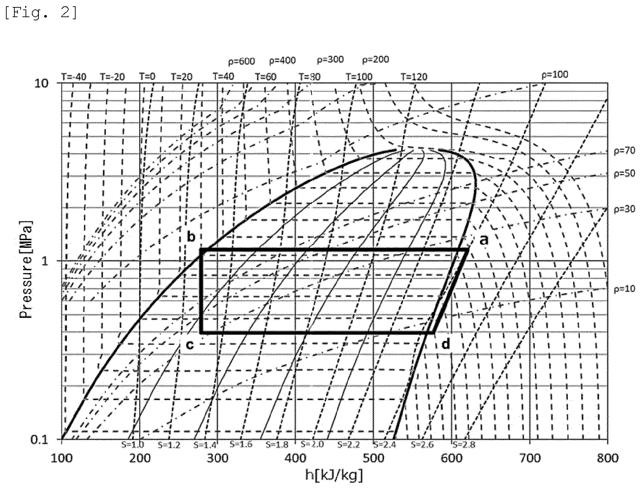

A state change of refrigerant in the heating operation and the cooling operation will be described using Fig. 2.

At the time of the heating operation, high pressure refrigerant (point a) discharged from the compressor 111 flows into the use-side heat exchanger 112 through the four-way valve 115, and radiates heat to heat medium which flows through the use-side heat exchanger 112.

The high pressure refrigerant (point b) after it radiates heat in the use-side heat exchanger 112 is decompressed and expanded by the expander 113 and then, the refrigerant flows into the heat source-side heat exchanger 114. The low pressure refrigerant (point c) which flows into the heat source-side heat exchanger 114 absorbs heat from outside air and evaporates, and again returns to a suction side (point d) of the compressor 111 through the four-way valve 115.

On the other hand, at the time of the cooling operation, high pressure refrigerant (point a) discharged from the compressor 111 flows into the heat source-side heat exchanger 114 through the four-way valve 115, and radiates heat to the outside air in the heat source-side heat exchanger 114.

The high pressure refrigerant (point b) after it radiates heat in the heat source-side heat exchanger 114 is decompressed and expanded by the expander 113 and then, the refrigerant flows into the use-side heat exchanger 112. The low pressure refrigerant (point c) which flows into the use-side heat exchanger 112 absorbs heat from the heat medium which flows through the use-side heat exchanger 112 and evaporates, and again returns to the suction side (point d) of the compressor 111 through the four-way valve 115.

Next, a state change of heat medium in the heat medium circuit 120 will be described. First, at the time of the heating operation, heat medium is heated by the use-side heat exchanger 112, and the heat medium circulates through the heat medium circuit 120 by the conveying device 121. According to this, the heat medium radiates heat in the use-side terminal 122, and the heat medium is utilized for heating a use-side load. The heat medium which radiates heat in the use-side terminal 122 and whose temperature is lowered is again heated by the use-side heat exchanger 112.

The high temperature heat medium heated by the use-side heat exchanger 112 circulates through the hot water tank 123 by the switching operation of the switching valve A 124a and the switching valve B 124b. The high temperature heat medium is introduced into the hot water tank 123 from an upper portion thereof, and low temperature heat medium is derived from a lower portion of the hot water tank 123, and is heated by the use-side heat exchanger 112.

On the other hand, at the time of the cooling operation, heat medium is cooled by the use-side heat exchanger 112, and the heat medium circulates through the heat medium circuit 120 by the conveying device 121. According to this, the heat medium absorbs heat in the use-side terminal 122, and the heat medium is utilized for cooling a use-side load. The heat medium which absorbs heat in the use-side terminal 122 and whose temperature rises is again cooled by the use-side heat exchanger 112.

The control device 130 controls the number of rotations of the compressor 111, a throttle amount of the expander 113, and the number of rotations of the conveying device 121, and the control device 130 switches the four-way valve 115, and switches the switching valve A 124a and the switching valve B 124b. According to this, efficiency of the vapor compression type refrigeration cycle is enhanced.

### [1-1-2. Configuration of control device]

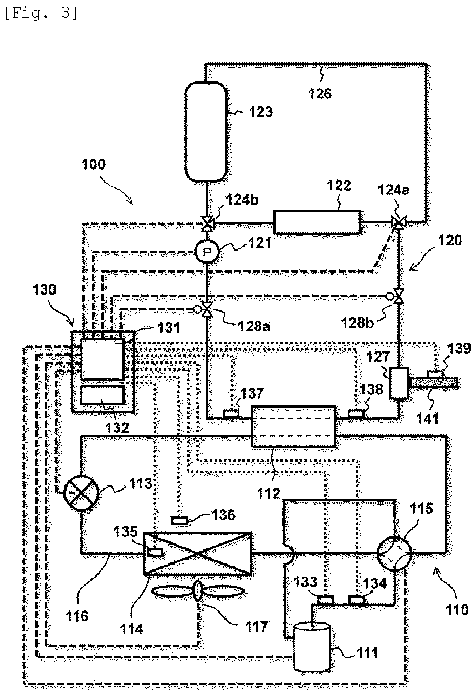

Next, configuration of the control device 130 will be described using Fig. 3.

The control device 130 is composed of a controller 131 provided with a microcomputer and a memory, and a user interface 132. The user interface 132 stops operation of the heat medium circulation system 100 and sets temperature of heat medium which is produced.

The control device 130 controls the operation action of the heat medium circulation system 100 based on detection values from a high pressure side pressure sensor 133, a discharge temperature sensor 134, a heat source-side heat exchange sensor 135 and an outside air temperature sensor 136. The high pressure side pressure sensor 133 is provided in a discharge-side pipe of the compressor 111, and detects discharge-side pressure. The discharge temperature sensor 134 detects discharged refrigerant temperature. The heat source-side heat exchange sensor 135 is provided in a refrigerant pipe of the heat source-side heat exchanger 114, and detects saturation temperature of refrigerant which flows through the heat source-side heat exchanger 114. The outside air temperature sensor 136 is provided in the vicinity of the heat source-side heat exchanger 114, and detects outside air temperature.

The control device 130 controls the operation action of the heat medium circulation system 100 based on detection values of a water-entering temperature sensor 137, a water-going temperature sensor 138 and a pressure sensor 139. The water-entering temperature sensor 137 is provided in the heat medium circuit 120, and detects temperature of heat medium which flows into the use-side heat exchanger 112. The water-going temperature sensor 138 detects temperature of heat medium which flows out from the use-side heat exchanger 112. The pressure sensor 139 detects pressure (exhaust gas pressure of refrigerant gas) in the gas discharging path 141.

### [1-2. Action]

Action of the heat medium circulation system 100 configured as described above will be described below.

### [1-2-1. Cooling and heating operation actions]

The controller 131 carries out the heating operation or the cooling operation based on input information of the user interface 132.

At the time of the operation, the compressor 111 and the air blower 117 are controlled based on a detection value of the outside air temperature sensor 136, a detection value of the water-going temperature sensor 138 and the number of rotations determined based on a water-going temperature set value of the user interface 132, and a throttle amount of the expander 113 is controlled while comparing with a detection value of the discharge temperature sensor 134 such that discharge temperature becomes equal to a discharge temperature target value which is determined based on a detection value of the high pressure side pressure sensor 133 and a detection value of the heat source-side heat exchange sensor 135.

At the time of operation, the number of rotations of the conveying device 121 is controlled such that a difference between a detection value of the water-going temperature sensor 138 and a detection value of the water-entering temperature sensor 137 becomes equal to a predetermined temperature difference.

### [1-22. Refrigerant discharge and operation action when flammable refrigerant leaks]

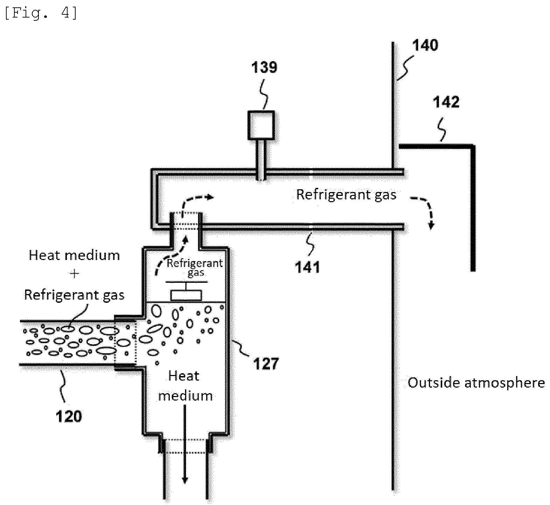

Operation action when flammable refrigerant leaks into the heat medium circuit 120 will be described based on Fig. 4.

Fig. 4 schematically shows a flow in which refrigerant gas mixed with heat medium is separated by the gas discharging device 127 and the refrigerant gas is discharged into the outside atmosphere.

When a partition wall of a refrigerant path and a heat medium path in the use-side heat exchanger 112 is cracked for example and flammable refrigerant leaks into the heat medium circuit 120 as shown in Fig. 4, the refrigerant gas flows into the gas discharging device 127 in a state where the refrigerant gas is mixed with the heat medium.

The refrigerant gas which flows into the gas discharging device 127 is separated from the heat medium by reduction of flow speed caused by increase in a diameter of path and by a buoyant force of gas, and the refrigerant gas stays in an upper portion of the gas discharging device 127.

According to this, liquid surface of level of the heat medium in the gas discharging device 127 is reduced, a float valve is lowered, and the staying flammable refrigerant gas is discharged into the gas discharging path 141 from the discharge port of the gas discharging device 127.

The pressure in the gas discharging path 141 rises by the discharged refrigerant gas, and the refrigerant gas is discharged into the outside atmosphere through the duct 142 by a pressure difference against the outside atmospheric pressure.

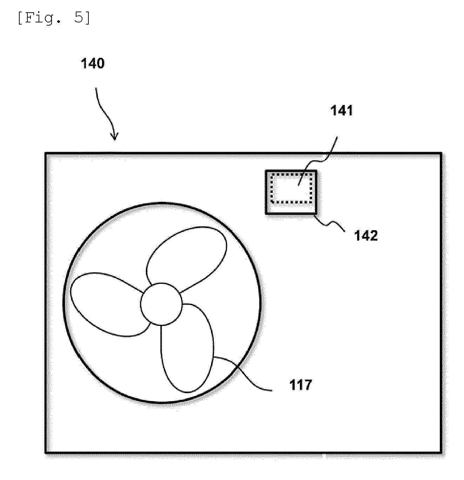

As shown in Fig. 5, the refrigerant gas is discharged into the atmosphere from a position higher than the center of the propeller fan of the air blower 117 of the casing 140 in its height direction. The refrigerant gas is mixed with a flow of air generated by the air blower 117, and is swiftly dispersed into the atmosphere outside the casing 140 together with air generated by the air blower 117. Hence, it is possible to prevent the flammable refrigerant from leaking into a living space, and safety is enhanced.

Next, shut-off action of a flow of flammable refrigerant which leaks into the heat medium circuit 120 will be described.

The shut-off valve A 128a and the shut-off valve B 128b are electromagnetic on-off valves. When the control device 130 detects that the flammable refrigerant leaks into the heat medium circuit 120, the shut-off valve A 128a and the shut-off valve B 128b energize an electromagnetic coil, the shut-off valve A 128a and the shut-off valve B 128b are operated in their closing directions, and circulation of heat medium in the heat medium circuit 120 is stopped.

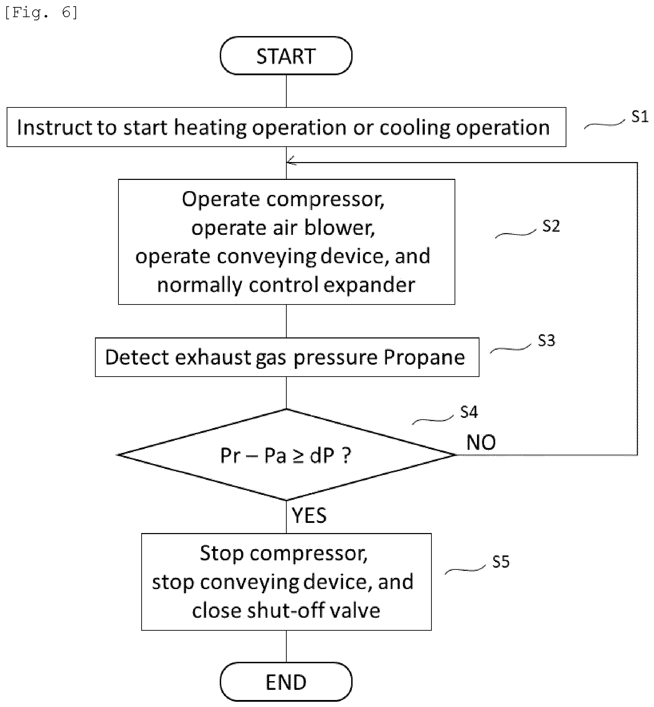

Action at this time will be described in detail using the control flowchart shown in Fig. 6.

First, by user's operation of the user interface 132, an instruction to start the heating operation or the cooling operation is issued (step S1).

By this instruction, the control device 130 operates the compressor 111, the air blower 117 and the conveying device 121, and controls the number of rotations thereof (step S2).

Next, the control device 130 detects exhaust gas pressure Pr in the gas discharging path 141 by the pressure sensor 139 (step S3).

Preset atmospheric pressure Pa and the exhaust gas pressure Pr are compared with each other, and it is determined whether a difference between the exhaust gas pressure Pr and the atmospheric pressure Pa is equal to or greater than a predetermined value dP (step S4).

When the difference between the exhaust gas pressure Pr and the atmospheric pressure Pa is smaller than the predetermined dP (No in step S4), pressure in the gas discharging path 141 is in proper range. That is, flammable refrigerant is not discharged from the gas discharging device 127. Hence, it is determined that flammable refrigerant does not leak into the heat medium circuit 120, and operation is continued.

On the other hand, when the difference between the exhaust gas pressure Pr and the atmospheric pressure Pa is equal to or greater than the predetermined value (Yes in step S4), pressure in the gas discharging path 141 is out of proper range. That is, flammable refrigerant is discharged from the gas discharging device 127.

At this time, it is determined that refrigerant gas leaks into the heat medium circuit 120, and operations of the compressor 111 and the conveying device 121 are stopped in a state where the operation of the air blower 117 is continued (step S5).

Next, the shut-off valve A 128a and the shut-off valve B 128b are energized, these valves are operated in their closing direction, and the flow of the heat medium is stopped (step S5).

### [1-3. Effect and the like]

As described above, in the embodiment, the heat medium circulation system 100 includes: a refrigerant circuit 110 which is formed by annularly connecting a compressor 111, a use-side heat exchanger 112, an expander 113 and a heat source-side heat exchanger 114 to one another and through which flammable refrigerant circulates; an air blower 117 for generating air which passes through the heat source-side heat exchanger 114; a casing 140 where at least the refrigerant circuit 110 and the air blower 117 are placed; a heat medium circuit 120 through which liquid phase heat medium cooled or heated in the use-side heat exchanger 112 by the flammable refrigerant discharged from the compressor 111 circulates; a conveying device 121 which is provided in the heat medium circuit 120 and through which the heat medium circulates; and a gas discharging device 127 placed in the casing 140 for discharging, to outside the heat medium circuit 120, the flammable refrigerant which leaks into the heat medium circuit 120; wherein a gas discharging path 141 which induces the flammable refrigerant to be discharged to outside atmosphere is connected to a discharge port of the gas discharging device 127.

According to this, since the gas discharging device 127 is placed in the casing 140, it is possible to prevent the action failure of the gas discharging device 127 caused by rain, dust or the like, and it is possible to discharge, into the outside atmosphere, gas such as flammable refrigerant discharged from the gas discharging path 141 without permeating the casing 140.

Hence, even if the flammable refrigerant leaks from the use-side heat exchanger 112 into the heat medium circuit 120, the flammable refrigerant is reliably discharged into the outside atmosphere which is outside the casing 140. Therefore, it is possible to prevent the flammable refrigerant from being ignited by spark of electric parts in the casing 140, and it is also possible to prevent the flammable refrigerant from leaking into a living space. Hence, it is possible to provide the heat medium circulation system 100 in which safety is enhanced.

In the embodiment, the opening of the gas discharging path 141 is provided at the position higher than the center of the air blower 117 in its height direction.

According to this, refrigerant gas discharged into the atmosphere from the position higher than the air blower 117 flows downward by a density difference against air, and the refrigerant gas is swiftly dispersed by the flow of air generated by the air blower 117.

Hence, since the flammable refrigerant is discharged into the outside atmosphere which is outside the casing 140, it is possible to suppress the ignition risk of the flammable refrigerant. Therefore, it is possible to provide the heat medium circulation system 100 in which safety is enhanced.

In the embodiment, flammable refrigerant discharged from an opening of the gas discharging path 141 is mixed with air which flows on the downstream side of the air blower 117 or on the upstream side of the heat source-side heat exchanger 114.

According to this, refrigerant gas which is discharged into the atmosphere exists on a side downstream from a charging portion of a motor or the like which is a driving source of the air blower 117. Hence, when the air blower 117 is stopped, the refrigerant gas is dispersed into the atmosphere as it is which is outside the casing 140 of the outdoor unit, and if the air blower 117 is driven, the refrigerant gas is mixed with flow of air generated by the air blower 117 and is dispersed. Even when spark is generated from the motor at this time, it is possible to suppress the ignition risk of flammable refrigerant. Hence, it is possible to provide the heat medium circulation system 100 in which safety is enhanced. Also when refrigerant gas discharged into the atmosphere exists upstream of the heat source-side heat exchanger 114, the refrigerant gas is dispersed into the atmosphere which is outside the casing 140 of the outdoor unit as it is when the air blower 117 is stopped, and if the air blower 117 is driven, the refrigerant gas is mixed with flow of air generated by the air blower 117 and is dispersed.

In the embodiment, the gas discharging device 127 is provided in the heat medium circuit 120 downstream of the use-side heat exchanger 112 at the highest position.

According to this, even if the conveying device 121 is stopped, refrigerant gas which leaks into the heat medium circuit 120 reliably reaches the gas discharging device 127 by a buoyant force, and is discharged into the atmosphere.

Hence, even after the conveying device 121 is stopped, flammable refrigerant which leaks into the heat medium circuit 120 can reliably be discharged into the outside atmosphere which is outside the casing 140. Therefore, it is possible to provide the heat medium circulation system 100 in which safety is enhanced.

In the embodiment, the casing 140 is provided with the duct 142 to cover an opening of the gas discharging path 141, and flammable refrigerant gas discharged from the discharge port of the gas discharging device 127 blows out downward.

According to this, it is possible to prevent rain or dust from entering the opening of the gas discharging path 141. Hence, it is possible to prevent operation failure or the clog of the discharging portion of the gas discharging device 127 caused by rain or dust, and it is possible to reliably discharge flammable refrigerant which leaks into the heat medium circuit 120 into the outside atmosphere which is outside the casing 140. Therefore, it is possible to provide the heat medium circulation system 100 in which safety is enhanced.

The embodiment includes a leakage detection sensor 139 which detects that flammable refrigerant leaks into the heat medium circuit 120, a shut-off valve (128a, 128b) which shuts off the flow of heat medium circulating through the heat medium circuit 120, and the control device 130, and when the leakage detection sensor 139 detects that the flammable refrigerant leaks into the heat medium circuit 120, the control device 130 operates the shut-off valve (128a, 128b) in its closing direction and stops the flow of heat medium.

According to this, since the shut-off valve A 128a and the shut-off valve B 128b are closed, circulation of heat medium in the heat medium circuit 120 with which refrigerant gas is mixed is stopped. Hence, it is possible to prevent the flammable refrigerant from moving toward the use-side terminal 122.

Hence, it is possible to prevent the flammable refrigerant from leaking into the living space where a user exists. Therefore, it is possible to provide the heat medium circulation system 100 in which safety is enhanced.

In the embodiment, the leakage detection sensor 139 is the pressure sensor 139 which detects pressure of gas in the gas discharging path 141. When a detected value of the pressure sensor 139 becomes higher than the atmospheric pressure Pa by a predetermined value or more, the control device 130 determines that flammable refrigerant leaks into the heat medium circuit 120.

In the embodiment, flammable refrigerant is R32, mixture refrigerant including 70% or more R32 by weight, propane or mixture refrigerant including propane.

According to this, global warming potential (GWP) is low, and even when refrigerant leaks, it is possible to prevent adverse influence on environment.

The above-described embodiment is for describing the examples of techniques in the present invention, and therefore, the embodiment can variously be changed, replaced, added or omitted within patent claims.

### [INDUSTRIAL APPLICABILITY]

The present disclosure can be applied to a heat medium circulation system in which flammable refrigerant may leak into a heat medium circuit. More specifically, the disclosure can be applied to a heat pump liquid heating device and the like.

### [EXPLANATION OF SYMBOLS]

- 100: heat medium circulation system
- 110: refrigerant circuit
- 111: compressor
- 112: use-side heat exchanger
- 113: expander
- 114: heat source-side heat exchanger
- 115: four-way valve
- 116: pipe
- 117: air blower
- 120: heat medium circuit
- 121: conveying device
- 122: use-side terminal
- 123: hot water tank
- 124a: switching valve A
- 124b: switching valve B
- 126: heat medium pipe
- 127: gas discharging device
- 128a: shut-off valve A
- 128b: shut-off valve B
- 130: control device
- 131: controller
- 132: user interface
- 133: high pressure side pressure sensor
- 134: discharge temperature sensor
- 135: heat source-side heat exchange sensor
- 136: outside air temperature sensor
- 137: water-entering temperature sensor
- 138: water-going temperature sensor
- 139: pressure sensor (leakage detection sensor)
- 140: casing
- 141: gas discharging path
- 142: duct

## Claims

1. A heat medium circulation system (100) comprising:
a refrigerant circuit (110) which is formed by annularly connecting a compressor (111), a use-side heat exchanger (112), an expander (113) and a heat source-side heat exchanger (114) to one another and through which flammable refrigerant circulates;
an air blower (117) for generating air which passes through the heat source-side heat exchanger (114);
a casing (140) where at least the refrigerant circuit (110) and the air blower (117) are placed;
a heat medium circuit (120) through which liquid phase heat medium cooled or heated in the use-side heat exchanger (112) by the flammable refrigerant discharged from the compressor (111) circulates;
a conveying device (121) which is provided in the heat medium circuit (120) and through which the heat medium circulates;
a gas discharging device (127) for discharging, to outside the heat medium circuit (120), the flammable refrigerant which leaks into the heat medium circuit (120); and
a gas discharging path (141) which induces the flammable refrigerant to be discharged to outside atmosphere and which is connected to a discharge port of the gas discharging device (127),
**characterized in that**
the gas discharging device (127) is provided in the casing (140), and
an opening of the gas discharging path (141) is provided at a position higher than a center of the air blower (117) in its height direction.

2. The heat medium circulation system (100) according to claim 1, being arranged such that the flammable refrigerant discharged from an opening of the gas discharging path (141) is mixed with air which flows downstream of the air blower (117) or upstream of the heat source-side heat exchanger (114).

3. The heat medium circulation system (100) according to claim 1 or 2, wherein the gas discharging device (127) is provided in the heat medium circuit (120) downstream of the use-side heat exchanger (112) and at a highest position.

4. The heat medium circulation system (100) according to any one of claims 1 to 3, wherein the casing (140) is provided with a duct (142) to cover an opening of the gas discharging path (141), and the flammable refrigerant discharged from the discharge port of the gas discharging device (127) blows out downward.

5. The heat medium circulation system (100) according to any one of claims 1 to 4, further comprising a leakage detection sensor (139) which detects that the flammable refrigerant leaks into the heat medium circuit (120), a shut-off valve (128a, 128b) which shuts off a flow of the heat medium circulating through the heat medium circuit (120), and a control device (130), wherein when the leakage detection sensor (139) detects that the flammable refrigerant leaks into the heat medium circuit (120), the control device (130) is configured to operate the shut-off valve (128a, 128b) in its closing direction, and stop the flow of the heat medium.

6. The heat medium circulation system (100) according to claim 5, wherein the leakage detection sensor (139) is a pressure sensor (139) which detects pressure of gas in the gas discharging path (141), and when a detected value of the pressure sensor (139) becomes higher than atmospheric pressure by a predetermined value or more, the control device (130) is configured to determine that the flammable refrigerant leaks into the heat medium circuit (120).

7. The heat medium circulation system (100) according to any one of claims 1 to 6, wherein the flammable refrigerant is R32, mixture refrigerant including 70% or more R32 by weight, propane or mixture refrigerant including propane.

## Patentansprüche

1. Wärmemedium-Kreislaufsystem (100), umfassend:
einen Kältemittelkreislauf (110), der durch ringförmiges Verbinden miteinander eines Kompressors (111), eines nutzungsseitigen Wärmetauschers (112), einer Expansionseinrichtung (113) und eines wärmequellenseitigen Wärmetauschers (114) gebildet wird und durch den ein brennbares Kältemittel zirkuliert;
ein Luftgebläse (117) zum Erzeugen von Luft, die durch den wärmequellenseitigen Wärmetauscher (114) strömt;
ein Gehäuse (140), in dem zumindest der Kältemittelkreislauf (110) und das Luftgebläse (117) angeordnet sind;
einen Wärmemediumkreislauf (120), durch den ein Flüssigphasen-Wärmemedium zirkuliert, das in dem nutzungsseitigen Wärmetauscher (112) durch das vom Kompressor (111) ausgestoßene brennbare Kältemittel gekühlt oder erwärmt wird;
eine Fördervorrichtung (121), die in dem Wärmemediumkreislauf (120) vorgesehen ist und durch die das Wärmemedium zirkuliert;
eine Gasabführungsvorrichtung (127) zum Abführen des brennbaren Kältemittels, das in den Wärmemediumkreislauf (120) eindringt, nach außerhalb des Wärmemediumkreislaufs (120); und
einen Gasabführungsweg (141), der das brennbare Kältemittel zum Abführen in die Außenatmosphäre leitet und der mit einer Auslassöffnung der Gasabführungsvorrichtung (127) verbunden ist,
**dadurch gekennzeichnet, dass**
die Gasabführungsvorrichtung (127) in dem Gehäuse (140) vorgesehen ist, und
eine Öffnung des Gasabführungswegs (141) an einer Position vorgesehen ist, die in Höhenrichtung höher liegt als ein Mittelpunkt des Luftgebläses (117).

2. Wärmemedium-Kreislaufsystem (100) nach Anspruch 1, derart angeordnet, dass das aus einer Öffnung des Gasabführungswegs (141) ausgestoßene brennbare Kältemittel mit Luft vermischt wird, die stromabwärts des Luftgebläses (117) oder stromaufwärts des wärmequellenseitigen Wärmetauschers (114) strömt.

3. Wärmemedium-Kreislaufsystem (100) nach Anspruch 1 oder 2, wobei die Gasabführungsvorrichtung (127) in dem Wärmemediumkreislauf (120) stromabwärts des nutzungsseitigen Wärmetauschers (112) und an einer höchsten Position vorgesehen ist.

4. Wärmemedium-Kreislaufsystem (100) nach einem der Ansprüche 1 bis 3, wobei das Gehäuse (140) mit einem Kanal (142) versehen ist, um eine Öffnung des Gasabführungswegs (141) abzudecken, und wobei das aus der Auslassöffnung der Gasabführungsvorrichtung (127) ausgestoßene brennbare Kältemittel nach unten ausbläst.

5. Wärmemedium-Kreislaufsystem (100) nach einem der Ansprüche 1 bis 4, ferner umfassend einen Leckagedetektionssensor (139), der erkennt, dass das brennbare Kältemittel in den Wärmemediumkreislauf (120) austritt, ein Absperrventil (128a, 128b), das einen Fluss des durch den Wärmemediumkreislauf (120) zirkulierenden Wärmemediums absperrt, und eine Steuervorrichtung (130), wobei, wenn der Leckagedetektionssensor (139) erkennt, dass das brennbare Kältemittel in den Wärmemediumkreislauf (120) austritt, die Steuervorrichtung (130) dafür eingerichtet ist, das Absperrventil (128a, 128b) in seine Schließrichtung zu betätigen und den Fluss des Wärmemediums zu stoppen.

6. Wärmemedium-Kreislaufsystem (100) nach Anspruch 5, wobei der Leckagedetektionssensor (139) ein Drucksensor (139) ist, der den Druck von Gas in dem Gasabführungsweg (141) erfasst, und wobei, wenn ein erfasster Wert des Drucksensors (139) um einen vorgegebenen Wert oder mehr höher als der Atmosphärendruck ist, die Steuervorrichtung (130) dafür eingerichtet ist, zu bestimmen, dass das brennbare Kältemittel in den Wärmemediumkreislauf (120) austritt.

7. Wärmemedium-Kreislaufsystem (100) nach einem der Ansprüche 1 bis 6, wobei das brennbare Kältemittel R32, ein Mischkältemittel, das 70 Gew.-% oder mehr R32 enthält, Propan oder ein Mischkältemittel, das Propan enthält, ist.

## Revendications

1. Système de circulation (100) de fluide caloporteur comprenant :
un circuit (110) à fluide frigorigène qui est formé par liaison les uns aux autres, de manière annulaire, d'un compresseur (111), d'un échangeur de chaleur (112) côté utilisation, d'un détendeur (113) et d'un échangeur de chaleur (114) côté source de chaleur et à travers lequel circule un fluide frigorigène inflammable ;
une soufflante (117) d'air destinée à générer de l'air qui traverse l'échangeur de chaleur (114) côté source de chaleur ;
un boîtier (140) dans lequel sont placés au moins le circuit (110) à fluide frigorigène et la soufflante (117) d'air ;
un circuit (120) à fluide caloporteur à travers lequel circule un fluide caloporteur en phase liquide refroidi ou chauffé dans l'échangeur de chaleur (112) côté utilisation par le fluide frigorigène inflammable évacué du compresseur (111) ;
un dispositif de transport (121) qui est disposé dans le circuit (120) à fluide caloporteur et à travers lequel circule le fluide caloporteur ;
un dispositif d'évacuation (127) de gaz destiné à évacuer, vers l'extérieur du circuit (120) à fluide caloporteur, le fluide frigorigène inflammable qui fuit dans le circuit (120) à fluide caloporteur ; et
un trajet d'évacuation (141) de gaz qui induit l'évacuation du fluide frigorigène inflammable vers l'atmosphère extérieure et qui est relié à un orifice d'évacuation du dispositif d'évacuation (127) de gaz,
**caractérisé en ce que**
le dispositif d'évacuation (127) de gaz est disposé dans le boîtier (140) et
une ouverture du trajet d'évacuation (141) de gaz est disposée en une position plus élevée que celle d'un centre de la soufflante (117) d'air dans sa direction de hauteur.

2. Système de circulation (100) de fluide caloporteur selon la revendication 1, agencé de telle sorte que le fluide frigorigène inflammable évacué d'une ouverture du trajet d'évacuation (141) de gaz est mélangé avec de l'air qui s'écoule en aval de la soufflante (117) d'air ou en amont de l'échangeur de chaleur (114) côté source de chaleur.

3. Système de circulation (100) de fluide caloporteur selon la revendication 1 ou 2, le dispositif d'évacuation (127) de gaz étant disposé dans le circuit (120) à fluide caloporteur en aval de l'échangeur de chaleur (112) côté utilisation et en une position la plus élevée.

4. Système de circulation (100) de fluide caloporteur selon l'une quelconque des revendications 1 à 3, le boîtier (140) étant pourvu d'un conduit (142) destiné à recouvrir une ouverture du trajet d'évacuation (141) de gaz et le fluide frigorigène inflammable évacué de l'orifice d'évacuation du dispositif d'évacuation (127) de gaz soufflant vers le bas.

5. Système de circulation (100) de fluide caloporteur selon l'une quelconque des revendications 1 à 4, comprenant en outre un capteur de détection de fuite (139) qui détecte que le fluide frigorigène inflammable fuit dans le circuit (120) à fluide caloporteur, une vanne d'arrêt (128a, 128b) qui arrête un écoulement du fluide caloporteur circulant à travers le circuit (120) à fluide caloporteur et un dispositif de commande (130), le dispositif de commande (130) étant conçu pour faire fonctionner la vanne d'arrêt (128a, 128b) dans son sens de fermeture et pour arrêter l'écoulement du fluide caloporteur lorsque le capteur de détection de fuite (139) détecte que le fluide frigorigène inflammable fuit dans le circuit (120) à fluide caloporteur.

6. Système de circulation (100) de fluide caloporteur selon la revendication 5, le capteur de détection de fuite (139) étant un capteur de pression (139) qui détecte la pression de gaz dans le trajet d'évacuation (141) de gaz et, lorsqu'une valeur détectée du capteur de pression (139) devient supérieure à la pression atmosphérique d'une valeur prédéterminée ou plus, le dispositif de commande (130) étant conçu pour déterminer que le fluide frigorigène inflammable fuit dans le circuit (120) à fluide caloporteur.

7. Système de circulation (100) de fluide caloporteur selon l'une quelconque des revendications 1 à 6, le fluide frigorigène inflammable étant du R32, un fluide frigorigène mixte comprenant 70 % ou plus de R32 en poids, du propane ou un fluide frigorigène mixte comprenant du propane.
